# FASCICULE DE BREVET EUROPEEN

(11) **EP 1 350 584 B1**
(45) Date de publication et mention de la délivrance du brevet: **02.11.2006**
(21) Numéro de dépôt: 03290766.9
(22) Date de dépôt: 26.03.2003
(51) Int. Cl.: B21K 1/76, B21K 3/00

(54) **Procédé de mise en forme d'une bielle forgée et outillage pour la mise en oeuvre d'un tel procédé**
Verfahren und Werkzeug zum Formen einer geschmiedeten Pleuelstange
Method and tool for forming a forged connecting rod

(30) Priorité: 29.03.2002 FR 0204032
(43) Date de publication de la demande: 08.10.2003
(73) Titulaire: Peugeot Citroen Automobiles SA, 78943 Vélizy-Villacoublay Cedex (FR)
(72) Inventeur: Niclas, André, 25200 Grand Charmont (FR)
(74) Mandataire: Lanceplaine, Jean-Claude

(56) Documents cités:
- DE-A- 2 919 337
- DE-A- 4 329 371
- US-A- 5 544 413
- US-A- 6 151 948
- PATENT ABSTRACTS OF JAPAN vol. 1999, no. 11, 30 septembre 1999 (1999-09-30) -& JP 11 147157 A (HONDA MOTOR CO LTD), 2 juin 1999 (1999-06-02)
- DOEGE E ET AL: "UMFORMTECHNIK, MEISENBACH, BAMBERG, DE" UMFORMTECHNIK, MEISENBACH, BAMBERG, DE, vol. 34, no. 4, décembre 2000 (2000-12), pages 42-44,46, XP000975788 ISSN: 0300-3167

## Description

La présente invention concerne un procédé de mise en forme d'une bielle forgée pour moteur à combustion interne et un outillage pour la mise en oeuvre de ce procédé.

L'invention concerne également une bielle forgée pour moteur à combustion interne obtenue avec un tel procédé.

Les bielles sont des éléments du moteur chargées de transmettre les efforts des pistons au vilebrequin et comportent une tête munie d'un alésage, un corps et un pied également muni d'un alésage.

Ces bielles sont généralement fabriquées par un procédé de forgeage à chaud ou à mi-chaud qui comporte plusieurs étapes consistant notamment à la fabrication d'une pré-ébauche par laminage d'un lopin préalablement chauffé à une température appropriée, à l'estampage ou au matriçage de la pré-ébauche et à une opération d'usinage des alésages de la tête et du pied pour obtenir une bielle brute.

Mais, ce procédé présente des inconvénients qui résident principalement dans la présence de bavures qui nécessitent une opération d'usinage supplémentaire consistant à réaliser le dressage des faces latérales de la bielle brute pour éliminer ces bavures pouvant entraîner lors de cette opération une déformation de la pièce. De plus, pour certaines géométries de bielles, le point faible en sollicitation de fatigue est situé au niveau des bavures qui sont localisées dans le plan de joint situé au niveau de la partie médiane de la bielle.

Or, il s'avère que la taille et la localisation de ces bavures sont difficilement contrôlables et sont inhérentes à l'estampage en matrice ouverte utilisée dans le procédé précédemment mentionné.

Mais, la tendance actuelle des constructeurs automobiles est d'alléger les véhicules et de réduire les coûts ce qui les amènent à demander des bielles brutes de plus en plus précises.

En effet, les bielles doivent présenter une dispersion géométrique générale de plus en plus faible, en particulier en ce qui concerne les déformations, et des répartitions de masses alternative et rotative très fines. En plus, ces bielles doivent être obtenues à partir d'une bielle brute peu onéreuse et nécessitant le moins d'opérations d'usinage possible.

Ces exigences sont difficilement réalisables avec les procédés utilisés jusqu'à présent.

On connaît dans le brevet US-A-5 544 413 un procédé de fabrication d'une bielle.

Ce procédé consiste tout d'abord à réaliser une pré-ébauche qui présente une forme déjà élaborée. Cette pré-ébauche est introduite dans un premier jeu de matrices pour obtenir une seconde pré-ébauche. Cette première ébauche présente une forme plus élaborée. La seconde pré-ébauche est introduite dans un second jeu de matrices pour obtenir une ébauche. Cette ébauche est ensuite introduite dans un second jeu de matrices pour obtenir une bielle brute. Cette étape correspond à un calibrage.

La matrice inférieure du troisième jeu de matrices est en deux parties pour permettre un écartement des deux demi-matrices inférieures et donner de ce fait une certaine liberté transversale au cours de l'opération de calibrage. Le déplacement des deux demi-matrices peut entraîner la formation de bavures au niveau de la bielle brute.

Compte tenu du nombre d'opérations et de l'utilisation de trois jeux de matrices, il se produit une perte de température de la pièce au cours des différentes opérations de forgeage, ce qui peut entraîner des modifications des caractéristiques métallurgiques des bielles brutes obtenues. Par ailleurs, les cadences de transfert des ébauches entre les différents jeux de matrices est fonction de l'opérateur et il se produit des fluctuations des caractéristiques métallurgiques des bielles brutes obtenues.

L'invention a pour but d'éviter ces inconvénients en proposant un procédé de mise en forme d'une bielle forgée permettant de réaliser une économie de matière et de diminuer les opérations d'usinage, tout en obtenant des tolérances de plus en plus précises et une bonne précision en poids ainsi qu'une répartition répétitive de la matière pour une fabrication en grande série.

L'invention a donc pour objet un procédé de mise en forme d'une bielle forgée, du type comprenant une tête munie d'un alésage, un corps et un pied muni d'un alésage, tel que défini à la revendication 1.

Selon d'autres caractéristiques de l'invention :
- le lopin présente une forme générale cylindrique à génératrice droite,
- le chauffage du lopin est réalisé à une température supérieure à 850°C,
- le chauffage du lopin est réalisé à une température comprise entre 750 et 900°C,
- les alésages de la tête et du pied sont réalisés sur une presse à estamper ou par usinage avec un outil à défoncer,
- on réalise après l'étape de finition une étape de grenaillage.

L'invention a également pour objet un outillage de mise en forme d'une bielle forgée, tel que défini à la revendication 7.

L'invention sera mieux comprise à la lecture de la description qui va suivre, donnée uniquement à titre d'exemple et faite en se référant aux dessins annexés, sur lesquels :
- la Fig. 1 est une vue schématique de dessus d'une bielle forgée,
- la Fig. 2 est une vue schématique en coupe selon la ligne 2-2 de la Fig. 1,
- la Fig. 3 est une vue schématique en perspective d'un lopin à partir duquel est réalisée la bielle forgée,
- la Fig. 4 est une vue schématique en perspective d'une pré-ébauche de bielle forgée réalisée à partir du lopin de la Fig. 3,
- la Fig. 5 est une vue schématique en coupe verticale d'un premier jeu de matrices d'un outillage pour réaliser une ébauche de bielle forgée,
- la Fig. 6 est une vue schématique de dessous de la matrice supérieure du premier jeu de matrices,
- la Fig. 7 est une vue schématique de dessus de la matrice inférieure du premier jeu de matrices,
- la Fig. 8 est une vue de dessus d'une ébauche obtenue par le premier jeu de matrices,
- la Fig. 9 est une vue schématique en coupe selon la ligne 9-9 de la Fig. 8,
- la Fig. 10 est une vue schématique en coupe verticale d'un second jeu de matrices d'un outillage conforme à l'invention,
- la Fig. 11 est une vue de dessous de la matrice supérieure du second jeu de matrices,
- la Fig. 12 est une vue schématique de dessus de la matrice inférieure du second jeu de matrices.

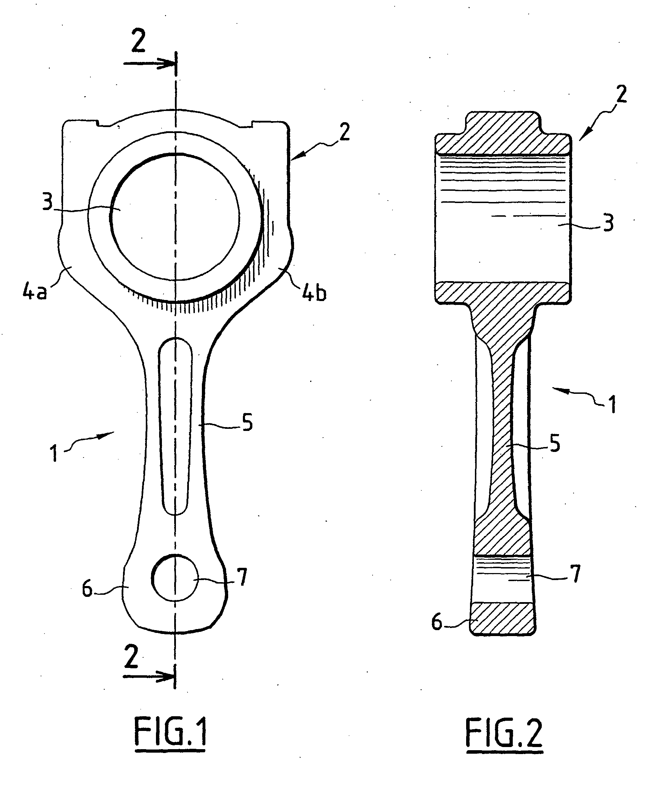

Sur les Figs. 1 et 2, on a représenté schématiquement une bielle désignée par la référence générale 1 et qui est constituée d'une tête 2 comportant un alésage 3 et deux oreilles 4a et 4b, d'un corps 5 et d'un pied 6 comportant un alésage 7.

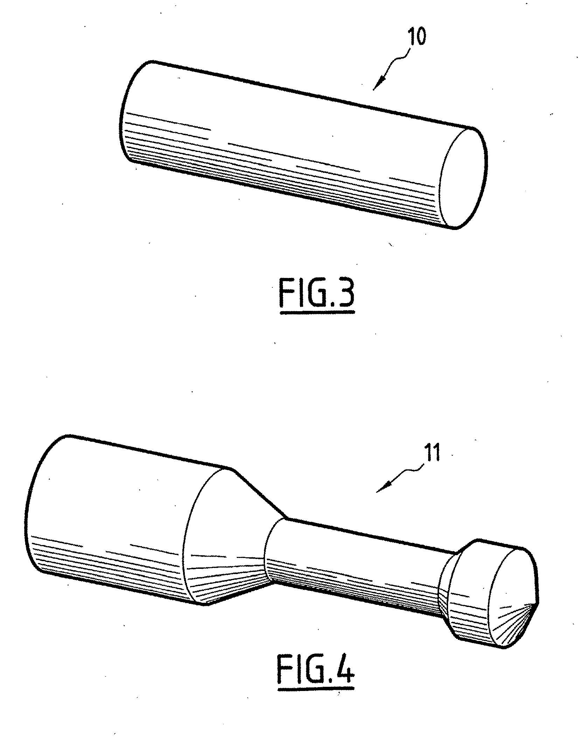

Pour réaliser ce type de bielle 1, le procédé selon l'invention consiste tout d'abord à cisailler une barre présentant une section cylindrique pour obtenir un lopin 10 de forme générale cylindrique à génératrice droite, comme représenté à la Fig. 3. Ce lopin 10 a une longueur et une épaisseur déterminées en fonction de la masse de la bielle à obtenir.

Le lopin 10 est, selon la nature de l'acier le composant, chauffé à une température supérieure à 850°C ou à une température comprise entre 750 et 900°C.

Le lopin 10 ainsi chauffé à la température désirée est transformé par exemple par martelage ou par laminage en une pré-ébauche 20 représentée à la Fig. 4 qui présente une longueur plus importante que le lopin 10 et une section transversale cylindrique et une directrice non linéaire.

La transformation du lopin 10 en pré-ébauche 11 est effectuée en réalisant une répartition longitudinale de la matière du lopin 10 pour obtenir cette pré-ébauche 11 qui présente dans une direction longitudinale plus de matière dans les zones d'extrémité destinées à former respectivement la tête 2 et le pied 6. Ainsi, la matière est répartie le plus près possible de l'endroit où elle se trouvera dans la bielle 1 finie.

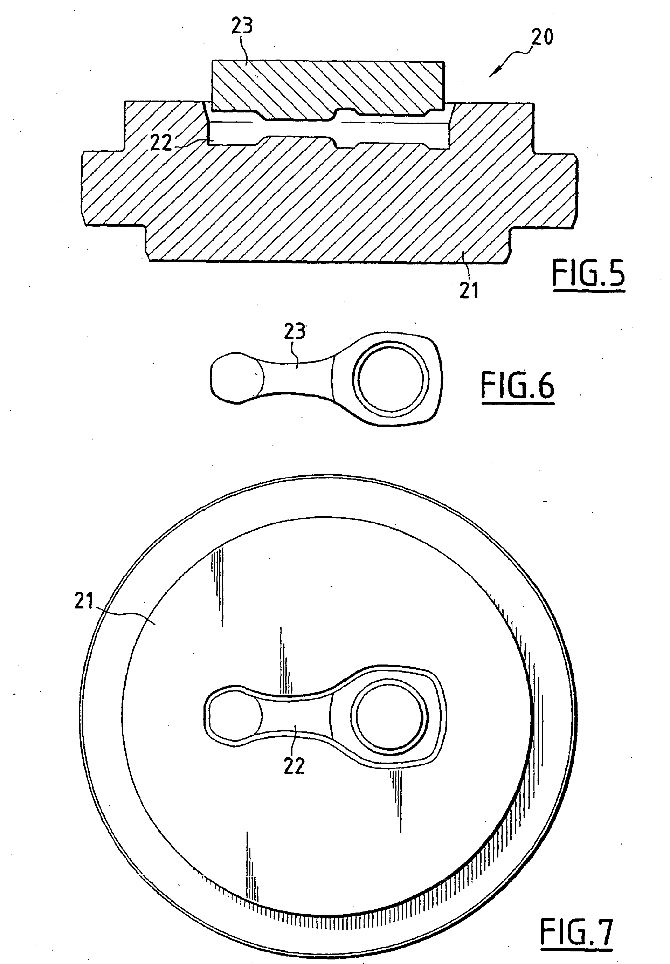

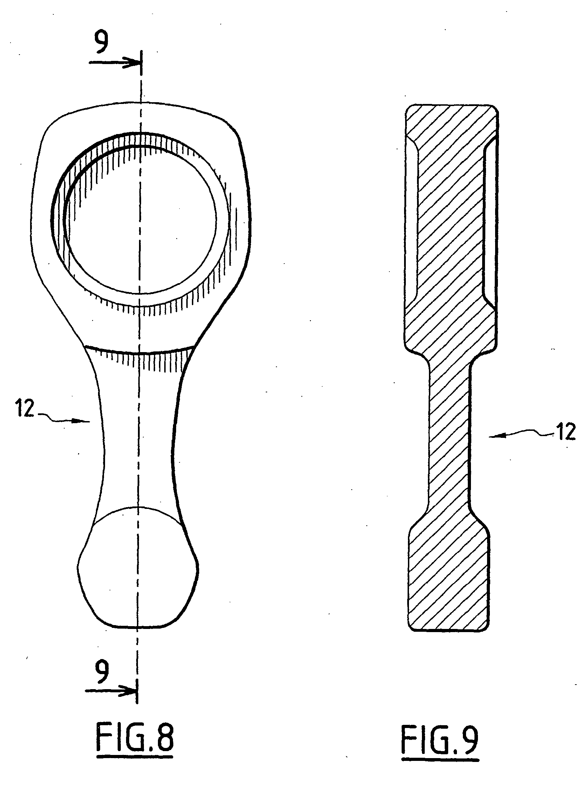

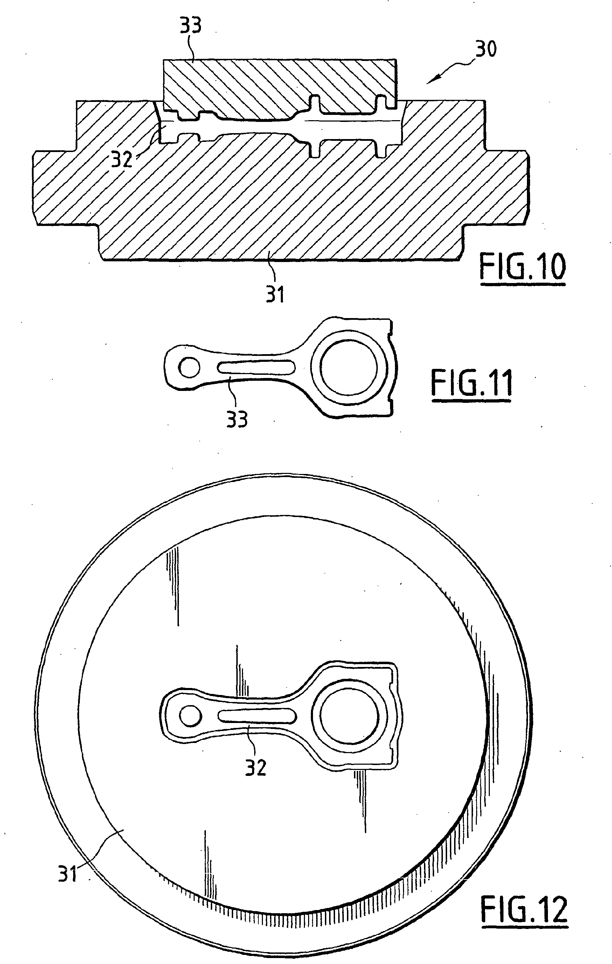

Ensuite la pré-ébauche 11 est transformée en une ébauche 12 représentée sur les figures 8 et 9 par un premier jeu de matrices désigné dans son ensemble par la référence 20, représenté sur les Figs. 5 à 7, et l'ébauche 12 est transformée en une bielle brute par un second jeu de matrices désigné par la référence générale 30 et représenté sur les Figs. 10 à 12.

Au cours de ces deux opérations, l'ébauche 12 est obtenue sans bavure et la bielle brute est également obtenue sans bavure ce qui permet d'éviter la phase de dressage des parois latérales.

Ainsi que représenté sur les Figs. 5 à 7, le premier jeu de matrices 20 comprend une matrice inférieure 21 comportant sur sa face supérieure une empreinte 22 fermée dont la forme correspond à la forme de l'ébauche 12 à obtenir. La matrice supérieure 23 forme un poinçon destiné à coulisser dans l'empreinte 22 et, à cet effet, cette matrice supérieure 23 présente un profil externe correspondant au profil interne de l'empreinte 22.

La face inférieure de la matrice supérieure 23 a la forme représentée à la Fig. 6 et qui correspond à la forme de l'une des faces principales de l'ébauche 12 à obtenir. Il en est de même pour le fond de l'empreinte 22 de la matrice inférieure 21 qui a la forme de l'autre des faces principales de cette ébauche 12.

Le jeu entre les matrices inférieures 21 et supérieure 23 est compris entré 0,3 et 0,05mm et l'empreinte 22 de la matrice inférieure 21 et la matrice supérieure 23 présentent des rayons de raccordement les plus petits possibles et qui sont compris entre 0,5 et 1,5mm.

De plus, l'empreinte 22 de la matrice inférieure 21 présente une pente d'éjection comprise entre 0,5 et 3°.

La pré-ébauche 11 est placée dans l'empreinte 22 de la matrice inférieure 21 et la descente de la matrice supérieure 23 formant poinçon dans cette empreinte 22 aplatie la pré-ébauche 11 afin de réaliser une répartition longitudinale et transversale de la matière et d'amener cette matière le plus à la verticale possible de sa position sur la bielle brute finale. La matière se déplace donc axialement et transversalement quelles que soient les zones destinées à former la tête 2, le corps 5 et le pied 6, le déplacement le plus important se situant au niveau de la tête 2.

Au niveau de la zone de l'empreinte 22 correspondant à la tête 2, la matière touche les bords de cette empreinte 22 à peu près en même temps afin de limiter les risques de formation de bavures verticales.

Comme représenté sur les Figs. 8 et 9, les reliefs de l'ébauche sont à peine esquissés à la fin de cette opération. En position fermée, les matrices inférieure 21 et supérieure 23 sont distantes d'une valeur inférieure de l'épaisseur de la bielle brute à obtenir.

Comme représenté sur les Figs. 10 à 12, le second jeu de matrices 30 comprend une matrice inférieure 31 munie sur sa face supérieure d'une empreinte 32 fermée dont la forme correspond à la forme de la bielle brute à obtenir, c'est à dire à la forme générale de la bielle représentée sur les Figs. 1 et 2, sans les alésages 3 et 7.

La matrice supérieure 33 forme un poinçon destiné à coulisser dans l'empreinte 32 et, à cet effet, cette matrice supérieure 33 présente un profil externe correspondant au profil interne de l'empreinte 32.

La face inférieure de la matrice supérieure 33 a la forme représentée à la Fig. 11 et qui correspond à la forme de l'une des faces principales de la bielle brute à obtenir. Il en est de même pour le fond de l'empreinte 32 qui a une forme qui correspond à la forme de l'autre face principale de la bielle brute à obtenir.

De manière identique au premier jeu de matrices 20, le jeu entre les matrices inférieure 21 et supérieure 33 est compris entre 0,3 et 0,05mm et l'empreinte 32 de la matrice inférieure 31 et la matrice supérieure 33 présentent des rayons de raccordement les plus petits possibles et qui sont compris entre 0,5 et 1,5mm.

De plus, les parois latérales de l'empreinte 32 de la matrice inférieure 31 présente une pente d'éjection comprise entre 0,5 et 3°.

L'ébauche 12 est placée dans l'empreinte 32 de la matrice inférieure 31 et la descente de la matrice supérieure 33 imprime dans la matière les formes finales de la bielle brute.

Au cours de cette étape de finition, il se produit une répartition de la matière longitudinalement, transversalement et surtout verticalement pour faire monter la matière dans les gravures des faces en vis à vis de l'empreinte 32 de la matrice inférieure 31 et de la matrice supérieure 33 avec un déplacement vertical de cette matière

Après cette étape de finition, les alésages 3 et 7 respectivement dans la tête 2 et dans le pied 6 sont réalisés par exemple sur une presse à estamper ou par usinage avec un outil à défoncer.

Une opération de grenaillage peut également être réalisée si le chauffage du lopin 10 a été effectué à une température supérieure à 800°C afin d'éliminer la calamine.

Grâce à l'utilisation de matrice fermée dans le procédé selon l'invention, la formation de bavures extérieures est évitée et la matière du lopin au cours de la première étape et de l'ébauche au cours de la seconde étape, au lieu de partir dans la bavure comme dans les procédés d'estampage classiques utilisés jusqu'à présent, ira donc se loger dans l'espace laissé par les rayons de raccordement plus petits.

Les bielles obtenues par le procédé selon l'invention sont en acier. Ce procédé permet d'obtenir également des bielles en fonte et par frittage.

Le procédé selon l'invention ainsi que l'outillage pour la mise en oeuvre de ce procédé permettent de réaliser une économie de matière lors de la fabrication des bielles ce qui est important étant donné que dans le calcul du prix de revient d'une bielle, le prix de la matière est compris entre un tiers et la moitié du prix de revient total.

De plus, ils permettent de réaliser une économie d'usinage puisque de nombreuses surfaces usinées jusqu'à présent sont obtenues sur la bielle brute assurant ainsi une simplification de la gamme d'usinage et les tolérances obtenues sont de plus en plus précises ce qui permet de dimensionner les bielles au plus juste entraînant de ce fait un allègement du moteur à combustion interne, en évitant de surdimensionner les pièces moteurs afin de tenir compte de la dispersion de la matière dans les bielles obtenues suivant les procédés de fabrications selon l'état de la technique.

Enfin, le procédé et le dispositif selon l'invention permettent de réaliser des bielles comportant des différences de hauteur importantes entre la tête, l'âme et le pied. Par exemple, la tête peut être plus épaisse que le pied et éventuellement l'âme moins épaisse que le pied.

## Revendications

1. Procédé de mise en forme d'une bielle forgée (1) du type comprenant une tête (2) munie d'un alésage (3), un corps (5) et un pied (6) muni d'un alésage (7), **caractérisé en ce que** :
- on chauffe un lopin (10) de longueur et d'épaisseur déterminées en fonction de la masse de la bielle (1) à obtenir,
- on effectue par martelage ou laminage une étape de répartition longitudinale de la matière du lopin (10) pour réaliser une pré-ébauche (11) cylindrique présentant dans une direction longitudinale plus de matière dans les zones d'extrémité destinées à former la tête (2) et le pied (6),
- on effectue dans un premier jeu de matrices (20) une étape de répartition longitudinale et transversale de la matière de la pré-ébauche (11) pour obtenir une ébauche (12) sans bavure,
- on effectue dans un second jeu de matrices (30) une étape de finition par une répartition de la matière longitudinalement, transversalement et en épaisseur de l'ébauche (12) pour obtenir une bielle brute sans bavure, chaque jeu de matrices (20, 30) comprenant une matrice inférieure (21, 31) comportant une empreinte (22, 32) fermée et une matrice supérieure (23, 33) formant poinçon et coulissant dans la matrice inférieure (21, 31) avec un jeu compris entre 0,3 et 0,05 mm, chaque empreinte (22, 32) présentant des rayons de raccordement des faces compris entre 0,5 et 1,5 mm et une pente d'éjection comprise entre 0, 5 et 3°, et
- on réalise des alésages (3, 7) de la tête (2) et du pied (6) de la bielle (1).

2. Procédé selon la revendication 1, **caractérisé en ce que** le lopin (10) présente une forme générale cylindrique à génératrice droite.

3. Procédé selon la revendication 1 ou 2, **caractérisé en ce que** le chauffage du lopin (10) est réalisé à une température supérieure à 850°C.

4. Procédé selon la revendication 1 ou 2, **caractérisé en ce que** le chauffage du lopin (10) est réalisé à une température comprise entre 750 et 900°C.

5. Procédé selon l'une quelconque des revendications 1 à 4, **caractérisé en ce que** les alésages (3, 7) de la tête (2) et du pied (6) sont réalisés par une presse à estamper ou par usinage avec un outil à défoncer.

6. Procédé selon l'une quelconque des revendications 1 à 5, **caractérisé en ce que** l'on réalise après l'étape de finition, une étape de grenaillage.

7. Outillage de mise en forme d'une bielle forgée (1) pour la mise en oeuvre du procédé selon l'une quelconque des revendications précédentes, **caractérisé en ce qu'**il comprend un premier jeu de matrices (20) de répartition longitudinale et transversale de la matière d'une pré-ébauche (11) pour obtenir une ébauche (12) sans bavure et un second jeu de matrices (30) de finition par une répartition de la matière longitudinalement, transversalement et en épaisseur de l'ébauche (12) pour obtenir une bielle brute sans bavure, chaque jeu de matrices (20, 30) comprenant une matrice inférieure (21, 31) comportant une empreinte (22, 32) fermée et une matrice supérieure (23, 33) formant poinçon et coulissant dans la matrice inférieure (21, 31) avec un jeu compris entre 0,3 et 0,05mm et chaque empreinte (22, 32) présentant des rayons de raccordement des faces compris entre 0,5 et 1,5mm et une pente d'éjection comprise entre 0,5 et 3°.

## Claims

1. Method for forming a forged connecting rod (1), of the type comprising a big end (2) provided with a hole (3), a shank (5) and a small end (6) which is provided with a hole (7), **characterised in that**:
- a slug (10) is heated having a length and thickness determined in accordance with the mass of the connecting rod (1) to be obtained,
- a step for longitudinally distributing the material of the slug (10) is carried out by means of hammering or rolling in order to produce a cylindrical pre-blank (11) which has, in a longitudinal direction, more material in the end zones which are intended to form the big end (2) and the small end (6),
- in a first set of dies (20), a step for longitudinally and transversely distributing the material of the pre-blank (11) is carried out in order to obtain a blank (12) without flash,
- in a second set of dies (30), a step is carried out for finishing by distributing the material of the blank (12) longitudinally, transversely and in terms of thickness in order to obtain a rough connecting rod without flash, each set of dies (20, 30) comprising a lower die (21, 31) which comprises a closed mould (22, 32) and an upper die (23, 33) which forms a stamp and which slides in the lower die (21, 31) with a clearance of between 0.3 and 0.05 mm, each mould (22, 32) having face connection radii of between 0.5 and 1.5 mm and an ejection pitch of between 0.5 and 3°, and
- holes (3, 7) are produced for the big end (2) and the small end (6) of the connecting rod (1).

2. Method according to claim 1, **characterised in that** the slug (10) is generally of cylindrical form having a straight generating line.

3. Method according to claim 1 or 2, **characterised in that** the heating of the slug (10) is carried out at a temperature greater than 850°C.

4. Method according to claim 1 or 2, **characterised in that** the heating of the slug (10) is carried out at a temperature of between 750 and 900°C.

5. Method according to any one of claims 1 to 4, **characterised in that** the holes (3, 7) of the big end (2) and the small end (6) are produced by means of a stamping press or by means of machining with a punching tool.

6. Method according to any one of claims 1 to 5, **characterised in that** a shot-blasting step is carried out after the finishing step.

7. Tool for forming a forged connecting rod (1) for implementing the method according to any one of the preceding claims, **characterised in that** it comprises a first set of dies (20) for longitudinally and transversely distributing the material of a pre-blank (11) in order to obtain a blank (12) without flash and a second set of dies (30) for finishing by distributing the material of the blank (12) longitudinally, transversely and in terms of thickness in order to obtain a rough connecting rod without flash, each set of dies (20, 30) comprising a lower die (21, 31) which comprises a closed mould (22, 32) and an upper die (23, 33) which forms a stamp and which slides in the lower die (21, 31) with a clearance of between 0.3 and 0.05 mm and each mould (22, 32) having face connection radii of between 0.5 and 1.5 mm and an ejection pitch of between 0.5 and 3°.

## Patentansprüche

1. Verfahren zum Ausbilden einer geschmiedeten Pleuelstange (1) des Typs, welcher einen mit einer Bohrung (3) versehenen Kopf (2), einen Körper (5) und einen mit einer Bohrung (7) versehenen Fuß (6) aufweist, **gekennzeichnet durch**
- Erwärmen eines Rohlings (10) von vorbestimmter Länge und Dicke, welcher gemäß der Masse der zu erzielenden Pleuelstange (1) ist,
- Durchführen eines Längsverteilungs-Schrittes des Materials des Rohlings (10) **durch** Hämmern oder **durch** Walzen, so dass ein zylindrischer Vor-Pressling (11) realisiert wird, welcher in Längsrichtung in den zum Ausbilden des Kopfes (2) und des Fußes (6) bestimmten Endbereichen mehr Material aufweist,
- Durchführen in einem ersten Matrizensatz (20) von einem Längsverteilungs- und Querverteilungs-Schritt des Materials des Vor-Presslings (11), so dass ein gratloser Pressling (12) erzielt wird,
- Durchführen in einem zweiten Matrizensatz (30) von einem Endbearbeitungs-Schritt **durch** Verteilen des Längs-, Quer-Materials und **durch** Stärken des Presslings (12), so dass eine unbearbeitete, gratlose Pleuelstange erzielt wird, wobei jeder Matrizensatz (20, 30) eine untere Matrize (21, 31), welche eine geschlossene Vertiefung (22, 32) aufweist, und eine obere Matrize (23, 33) aufweist, welche einen Stanzstempel ausbildet und in die untere Matrize (21, 31) mit einem Spiel einschiebbar ist, welches zwischen inklusive 0,3 und 0,05 mm ist, wobei jede Vertiefung (22, 32) Seiten mit Übergangsradien zwischen inklusive 0,5 und 1,5 mm und eine Auswurfneigung zwischen inklusive 0,5 und 3° aufweist, und
- Realisieren der Bohrungen (3, 7) am Kopf (2) und am Fuß (6) der Pleuelstange (1).

2. Verfahren gemäß Anspruch 1, **dadurch gekennzeichnet, dass** der Rohling (10) eine im wesentlichen zylindrische Form mit einer geraden Mantellinie aufweist.

3. Verfahren gemäß Anspruch 1 oder 2, **dadurch gekennzeichnet, dass** das Erwärmen des Rohlings (10) bei einer Temperatur von 850°C durchgeführt wird.

4. Verfahren gemäß Anspruch 1 oder 2, **dadurch gekennzeichnet, dass** das Erwärmen des Rohlings (10) bei einer Temperatur zwischen 750 und 900°C durchgeführt wird.

5. Verfahren gemäß einem der Ansprüche 1 bis 4, **dadurch gekennzeichnet, dass** die Bohrungen (3, 7) des Kopfes (2) und des Fußes (6) mittels einer Gesenkschmiedepresse oder mittels einer Fräs-Vorrichtung realisiert werden.

6. Verfahren gemäß einem der vorhergehenden Ansprüche 1 bis 5, **dadurch gekennzeichnet, dass** nach dem Endbearbeitungs-Schritt ein Sandstrahl-Schritt durchgeführt wird.

7. Vorrichtung zum Ausbilden einer geschmiedeten Pleuelstange (1) zum Anwenden des Verfahrens gemäß einem der vorhergehenden Ansprüche, **dadurch gekennzeichnet, dass** dasselbe einen ersten Matrizen-Satz (20) zum Längs- und Querverteilen des Materials eines Vor-Presslings (11), so dass ein gratloser Pressling (12) erzielt wird, und einen zweiten Matrizen-Satz (30) zum Endbearbeiten durch Verteilen des Längs- und Quermaterials und durch Stärken des Presslings (12) aufweist, so dass eine unbearbeitete, gratlose Pleuelstange erzielt wird, wobei jeder Matrizensatz (20, 30) eine untere Matrize (21, 31), welche eine geschlossene Vertiefung (22, 32) aufweist, und eine obere Matrize (23, 33) aufweist, welche einen Stanzstempel ausbildet und in die untere Matrize (21, 31) mit einem Spiel einschiebbar ist, welches zwischen inklusive 0,3 und 0,05 mm ist, wobei jede Vertiefung (22, 32) Seiten mit Übergangsradien zwischen inklusive 0,5 und 1,5 mm und eine Auswurfneigung zwischen inklusive 0,5 und 3° aufweist.
